# EUROPEAN PATENT APPLICATION

(11) **EP 4 454 857 A1**
(43) Date of publication of application: **30.10.2024**
(21) Application number: 23170533.6
(22) Date of filing: 28.04.2023
(51) Int. Cl.: B29C 48/92, B29C 48/04, B29B 9/06, B29C 48/385, B29C 48/345, B29B 9/12

(54) **PROCESS OF PREPARING A POLYOLEFIN COMPRISING A VIRGIN AND A RECYCLED FRACTION**

(71) Applicant: Basell Polyolefine GmbH, 50389 Wesseling (DE)
(72) Inventor: HEES, Timo, 55116 Mainz (DE); MAUS, Andreas, 60431 Frankfurt (DE)
(74) Representative: LyondellBasell

(57) **Abstract**

The present disclosure relates to a process for continuously preparing a pelletized polyolefin composition comprising a virgin polyolefin and a recycled polyolefin. The process comprises the steps of preparing the virgin polyolefin in form of polyolefin powder or melt; providing a recycled polyolefin having a lower temperature than the virgin polyolefin of step a; transferring the virgin polyolefin, the recycled polyolefin and optionally one or more additives into a feed port of an extruder device; melting and homogenizing the virgin polyolefin, the recycled polyolefin and optionally one or more additives in the extruder device; and pelletizing the molten polyolefin composition.

## Description

### FIELD OF THE DISCLOSURE

The present disclosure relates to a continuous process for preparing a polyolefin composition comprising a recycled polyolefin fraction and a virgin polyolefin fraction.

### BACKGROUND OF THE DISCLOSURE

Polyolefins, are increasingly consumed in large amounts for many applications, including packaging for food and other goods, fibers, automotive components, and a great variety of manufactured articles. However, the said massive use of polyolefins is creating a concern as regards the environmental impact of the waste materials generated after the first use.

In view of current market developments that seek for reduction of environmental footprint in the value chain of materials, including polymer materials, there is an ongoing drive to re-use materials, and to reduce the quantity of "new" materials that are used in the production of a variety of articles.

In field of applications of polymer materials, this translates to a desire to recycle materials and to reduce the quantity of so-called "virgin" polymer material, i.e. polymer material that is provided as new polymers obtained from polymerization processes, such as from polymerization processes of fossil materials-based monomeric materials and/or biologically derived monomers.

Thus, an advantageous source of polyolefin material is presently represented by polyolefin recyclate, mainly coming from recovery of post-consumer and/or industrial plastic waste.

As a result, a common attempt to mitigate the problem is that of replacing, at least partially, virgin polyolefin compositions with variable amounts of recycled plastic materials deriving from streams of post-consumer or of post-industrial wastes.

### SUMMARY OF THE DISCLOSURE

An object of the present disclosure is to provide a cost efficient process for preparing a polyolefin comprising a virgin polyolefin component and a recycled polyolefin component.

This object is solved by a continuous process for preparing a polyolefin composition comprising a recycled polyolefin component A and a virgin polyolefin component B, the process comprising the steps of:
a. preparing the virgin polyolefin in form of polyolefin powder or polyolefin melt;
b. providing a recycled polyolefin having a lower temperature than the virgin polyolefin of step a; and
c. transferring the virgin polyolefin, the recycled polyolefin and optionally one or more additives into an extruder device;
d. melting and homogenizing the virgin polyolefin, the recycled polyolefin and optionally one or more additives in the extruder device; and
e. pelletizing the molten polyolefin composition.

The process of the present disclosure allows for an economic production of pelletized polyolefin compositions having a recycled polyolefin component and a virgin polyolefin component. The virgin polyolefin powder or polyolefin melt produced in the polymerization reactors is directly compounded in an extruder device with the recycled polyolefin component eliminating the need of intermediate storage facilities. A so called "offline" compounding approach, in which both recycled and virgin material are provided in pelletized form would lead to high production cost and non-efficient use of energy. Both recycled material and virgin materials have to be processed by melt extrusion to form them into pellets using separate processes and are finally melt blended to produce final compositions which could also lead to an increased thermal degradation and/or thermomechanical degradation.

Hereinafter, further developments are specified which can be combined with one another as desired, independently of one another.

In some embodiments, the virgin polyolefin has a temperature of between 50 to 300°C, preferably from 60 to 120°C, more preferably from 70 to 110°C when being fed to the extruder device. In particular, when the virgin polyolefin is provided in powder form, the temperature of the polyolefin powder may be between 50 to 120°C, preferably between 60 to 115°C, more preferably from 70 to 110°C when being fed to the extruder device.

In some embodiments, a mixing device is provided upstream of the extruder device. The virgin polyolefin, the recycled polyolefin and optionally one or more additives may be fed to the mixing device and further homogenized before feeding the mixture to the extruder device, in particular a hopper of the extruder device. Thus, the components for melt blending may be further homogenized before melting leading to a reduction of a gel level in the final composition.

In some embodiments, the virgin polyolefin may be fed to the mixing device upstream of a location at which the recycled polyolefin component is fed to the mixing device.

In some embodiments, the recycled polyolefin component may be fed separately to the extruder device. In this embodiment, the virgin polyolefin and one or more additives may be mixed in the mixing device forming a mixture that is fed to the extruder device separately to the recycled polyolefin component.

Depending on the needs, the sorting of polyolefin fraction can be enhanced in order to obtain an as much as possible pure fraction of either polypropylene or polyethylene in the recycled polyolefin component. Preferably, the recycled polyolefin component comprises a mixture of polyethylene (PE) and polypropylene (PP) polymers in a weight ratio 99:1 to 1:99. When PP is more abundant in the mixture, its weight ratio with PE is preferably higher than 80:20, more preferably higher than 90:10, and especially from 95:5 to 99:1. When PE is more abundant in the mixture, its weight ratio with PP is preferably higher than 80:20, more preferably higher than 90:10, and especially from 95:5 to 99:1. The polyethylene (PE) fraction can contain one or more of high density polyethylene (HDPE), low-density polyethylene (LDPE), linear low density polyethylene (LLDPE). Polypropylene fraction (PP) can be either propylene homopolymer or a propylene copolymer with lower amount of ethylene and/or butene. In addition, the recycled polyolefin component may comprise other polyolefins like polybutene. In a particular embodiment, the recycled polyolefin component may comprise also polymeric mixtures that incorporates other materials like polystyrene (PS), ethyl-vinyl acetate copolymer (EVA), ethyl-vinyl alcohol copolymer (EVOH), polyvinyl chloride (PVC), or mixtures thereof. In a preferred embodiment, the recycled polyolefin material feedstock is constituted by more than 80 wt.% and preferably more than 90 wt.% of a mixture between polyethylene and polypropylene.

In some embodiments, the recycled polyolefin component is provided in pelletized form. Consequently, the recycled polyolefin pellets have been processed prior to melt compounding with the virgin polymer and thus comprise a well-defined composition in terms of physical properties, e.g. melt flow rate, density or the like. Furthermore, a melt filter which is often utilized in extrusion of recycled material can be omitted.

In some embodiments, the virgin polyolefin component is a bimodal or multimodal polyolefin, preferably a bimodal or multimodal polyethylene.

In some embodiments, the virgin polyolefin component may be a polyethylene homo- or copolymer.

In some embodiments, an in-line or on-line melt flow measuring device is provided for measuring the melt flow rate of the molten mixture in the extruder device. The amount of virgin polyolefin, recycled polyolefin and/or the one or more additives fed to the mixing device may be adjusted based on a difference between the measured melt flow rate and a preset melt flow rate.

In some embodiments, the recycled polyolefin component may be provided in the form of flakes. In this embodiment, the flakes may be molten, e.g. in a primary extruder, before the melt of the recycled polyolefin component is mixed with the virgin polyolefin component in the extruder device. In this the continuous production of the virgin polyolefin component may be combined with the continuous production of the recycled polyolefin component.

### BRIEF DESCRIPTION OF THE DRAWINGS

Figure 1 shows schematically an exemplary set-up for an extrusion process according to an exemplary embodiment of the present disclosure;
Figure 2 shows schematically a further exemplary set-up for an extrusion process according to an exemplary embodiment of the present disclosure.

### DETAILED DESCRIPTION OF THE DISCLOSURE

While multiple embodiments are disclosed, still other embodiments will become apparent to those skilled in the art from the following detailed description. As will be apparent, certain embodiments, as disclosed herein, are capable of modifications in various obvious aspects all without departing from the spirit and scope of the claims as presented herein. Accordingly, the drawings and detailed description are to be regarded as illustrative in nature and not restrictive.

In the context of the present disclosure;
- the percentages are expressed by weight, unless otherwise specified;
- the total weight of a polymer composition sums up to 100% by weight, unless otherwise specified;
- the term "comprising" referred to a polymer, a plastic material, a polymer composition, mixture or blend, should be construed to mean "comprising or consisting essentially of";
- the term "consisting essentially of" means that, in addition to those components which are mandatory, other components may also be present in the material, provided that the essential characteristics of the material are not materially affected by their presence. Examples of components that, when present in customary amounts, do not materially affect the characteristics of a polymer or of a polyolefin composition, mixture or blend are catalyst residues, antistatic agents and processing aids;
- the term "copolymer" is referred to a polymer deriving from the intentional polymerization of at least two different comonomers, i.e. the term "copolymer" includes terpolymers;
- the terms "pre-consumer waste" and "post-industrial waste" are synonyms and designate a material diverted from the waste stream originating from a manufacturing process. It might be material trimmings, faulty items, overstock raw materials, excess inventory, etc.;
- the term "post-consumer waste" designate a material that is discarded after it has been used by a final consumer;
- the terms "recycled polyolefin material", "recyclate" and "recycled" indicate recovered material from either post-consumer waste (PCW) or post industrial waste (PIW) which includes a fraction made of polyolefins.
- the term "virgin" defines newly produced polyolefins prior to first use and not being recycled. The virgin polymer may be obtained from polymerization processes, such as from polymerization processes of fossil materials-based monomeric materials and/or biologically derived monomeric materials. Biobased polyethylenes and monomers are derived from natural products and are distinguished from polymers and monomers obtained from fossil-fuel sources. Because biobased materials are obtained from sources that may actively reduce CO₂ in the atmosphere or otherwise require less CO₂ emission during production, such materials are often regarded as "green" or renewable. The virgin polyolefin can derive from polymerization of olefins such as ethylene, propylene, butene-1, hexene-1 and octene-1 and mixtures thereof.

Specific examples of the olefinic polymers are high density ethylene polymers (HDPE, having a density higher than 0.940 g/cc), comprising ethylene homopolymers and copolymers of ethylene with alpha-olefins having 3-12 carbon atoms; linear low density polyethylenes (LLDPE, having a density lower than 0.940 g/cc) and very low density and ultra low density (VLDPE and ULDPE, having a density lower than 0.920 g/cc, to 0.880 g/cc) consisting of copolymers of ethylene with one or more alpha-olefins having from 3 to 12 carbon atoms, having a mole content of units derived from the ethylene higher than 80%; isotactic polypropylenes and crystalline copolymers of propylene and ethylene and/or other alpha-olefins having a content of units derived from propylene higher than 85% by weight; copolymers of propylene and 1-butene having a content of units derived from 1-butene comprised between 1 and 40% by weight; heterophasic copolymers comprising a crystalline polypropylene matrix and an amorphous phase comprising copolymers of propylene with ethylene and/or other alpha-olefins.

The above mentioned polyolefins can be obtained by polymerizing the relative monomers in the presence of any type of polymerization catalyst, such as single-site or heterogeneous ZN catalysts, and using platform technologies known in the art such as liquid phase polymerization, gas-phase polymerization and hybrid liquid/gas-phase polymerization.

The process of the present disclosure is in particular a process for preparing polyolefin compositions comprising polyolefins which were obtained by homopolymerization or copolymerization of ethylene or propylene. As comonomers in propylene polymerization preference is given to using up to 40 wt.% of ethylene and/or 1-butene.

In a preferred embodiment, the process of the present disclosure refers to preparing a polyolefin composition comprising polyolefins obtained by homopolymerizing or copolymerizing ethylene. Particular preference is given to preparing bimodal or multimodal polyolefin compositions comprising polyethylenes in which ethylene is copolymerized with up to 40 wt.% of C₃-C₈-1-alkenes, preferably butene-1, pentene-1, hexene-1, octene-1 or mixtures thereof. Particular preference is given to a process in which ethylene is copolymerized with up to 20 wt.% of butene-1, hexene-1 or mixtures thereof.

All industrially known polymerization methods may be used for preparing the virgin polyolefin components. This includes solution processes, suspension processes and gas-phase processes. The polymerization can be carried our batchwise or preferably continuously in two or more stages. Processes of this type are generally known to those skilled in the art. Among the polymerization processes mentioned, gas-phase polymerization, in particular in gas-phase fluidized bed reactors or multi-zone circulating gas-phase reactors and suspension polymerization, in particularly in loop reactors or stirred tank reactors are preferred.

The process of the present disclosure may be employed for preparing polyolefin compositions of all types of common polyolefin polymers. The process of the present disclosure is especially suitable for preparing polyolefin compositions comprising bimodal or multimodal polyolefins, wherein the terms bimodal and multimodal refer to the modality of the molecular weight distribution. Such polymers may be obtained from polymerizing olefins in a cascade of two or more polymerization reactors under different reaction conditions. Thus, the "modality" indicates how many different polymerization conditions were utilized to prepare the polyolefin, independently whether this modality of the molecular weight distribution can be recognized as separated maxima in a gel permeation chromatography (GPC) curve or not. As used herein, the term "multimodal" may define polyolefins have more than two modalities and thus excludes "bimodal". In addition to the molecular weight distribution, the polyolefin polymer can also have a comonomer distribution, wherein preferably the average comonomer content of polymer chains with a higher molecular weight is higher than the average comonomer content of polymer chains with a lower molecular weight. It is however also possible to employ identical or very similar reaction conditions in all polymerization reactors of the reaction cascade and so prepare narrow molecular weight polyolefin polymers. A complication in producing multimodal polyolefins in a cascade of polymerization reactors operating at different conditions is however that, caused by different residence times of individual polyolefin particles in the different reactor, the composition of the individual polyolefin particles of a polyolefin powder may vary strongly.

The polymerization can be carried out using all customary olefin polymerization catalyst. That means the polymerization can be carried out, for example, using Phillips catalysts based on chromium oxide, using titanium-based Ziegler- or Ziegler-Natta-catalysts, using single site catalysts, or using mixtures of such catalysts. The preparation and use of these catalysts for olefin polymerization are generally known.

The polyolefins are preferably obtained as powder that means in form of small particles. The particles which have usually a more or less regular morphology and size, depending on the catalyst morphology and size, and on polymerization conditions. Depending on the catalyst used, the particles of the polyolefin powder usually have a mean diameter of from a few hundred to a few thousand micrometers. In the case of chromium catalysts, the mean particle diameter is usually from about 300 to about 1600 micrometers, and in the case of Ziegler type catalysts the mean particle diameter is usually from about 100 to about 3000 micrometers. The particle size distribution can, for example, advantageously be determined by sieving. Suitable techniques are e.g. vibrating sieve analysis or sieve analysis under an air jet.

In some embodiments, the virgin polyolefin component may be a low density polyethylene (LDPE).

There are two basic high pressure polymerization processes for the manufacture of LDPE: autoclave and tubular.

The LDPE made by the autoclave reactor process ("autoclave LDPE") has a high concentration of long chain branches, resulting into high values of elongation hardening, and a relatively broad molecular weight distribution that make it easy to process.

The autoclave polymerization may be carried out in the presence of radical initiating agents selected from organic peroxides.

The tubular reactor process does not necessarily require the use of organic peroxides. It can be carried out by using oxygen alone as the radical initiating agent, thus allowing to prepare LDPE which is free from products of chemical degradation of organic peroxides.

The said LDPE can also be prepared with a mixed process combining both autoclave and tubular reactors.

The said processes and the resulting LDPE product are well known in the art. For instance, us patent No. 3,691,145 and us patent application NO. 2010/0076160 teach producing LDPE in a tubular reactor process. In said processes the resulting LDPE may be provided in molten form to the extruder device.

In preferred embodiments, preferably in embodiments, in which the virgin polyolefin is provided as a polyolefin powder, the polyolefin is additionally combined with one or more additives. Such additives are common in the art. Especially for multimodal polyolefins it is however essential that they are very uniformly distributed within the polyolefin. Examples of additives for preparing polyolefin compositions are antioxidants, light stabilizers, acid scavengers, lubricants, processing aids, antiblocking agents, slip agents, antistatic agents, antifogging agents, pigments or dyers, nucleating agents, flame retardants or fillers. It is common that several additives are added to the polyolefin compositions. The multiple additives can be different types of additives. It is however also possible that several representatives of one type of additives are added to one polyolefin composition. Additives of all these types are generally commercially available and are described, for example, in Hans Zweifel, Plastics Additives Handbook, 5th Edition, Munich, 2001.

In some embodiments, one of the additives supplied to the extruder device is an organic peroxide, such as dicumyl peroxide, di-tert-butyl peroxide, tert-butylperoxybenzoate, 2,5-dimethyl-2,5-di(tert-butylperoxy)hexane, 3,6,9-triethyl-3,6,9-trimethyl-1,2,4,5,7,8-hexoxonane, representatives of 3,6,9-trimethyl-3,6,9-tris(alkyl)-1,2,4,5,7,8-hexoxonanes in which the alkyl radical is propyl or ethyl, tertbutylperoxyneodecanoate, tert-amyl peroxypivalate, 1,3-bis(tert-butylperoxyisopropyl)benzene, and the like. Preferably, the organic peroxide is 2,5-dimethyl-2,5-di(tert-butylperoxy)hexane, 3,6,9-triethyl-3,6,9-trimethyl-1,2,4,5,7,8-hexoxonane, or a representative of 3,6,9-trimethyl-3,6,9-tris(alkyl)-1,2,4,5,7,8-hexoxonanes in which the alkyl radical is propyl or ethyl.

In a preferred embodiment of the present disclosure, the organic peroxide is employed in form of a polyolefin mixture, which is preferably prepared by adding the organic peroxide in pure form or as a solution in a diluent like a hydrocarbon to a polyolefin powder. Preferred polyolefin mixtures have a content of the organic peroxide in the polyolefin mixture in the range from 0.5 to 24 wt.%, preferably from 1 to 20 wt.% and more preferably from 2 to 10 wt.%.

Preferably, the recycled polyolefin material results from the sorting of the PCW or PIW aimed at selecting the polyolefin fraction.

Depending on the needs, the sorting of polyolefin fraction can be enhanced in order to obtain an as much as possible pure fraction of either polypropylene or polyethylene. Preferably, the recycled polyolefin material comprises a mixture of polyethylene (PE) and polypropylene (PP) polymers in a weight ratio 99:1 to 1:99. When PP is more abundant in the mixture, its weight ratio with PE is preferably higher than 80/20, more preferably higher than 90/10, and especially from 95/5 to 99:1. When PE is more abundant in the mixture, its weight ratio with PP is preferably higher than 80/20, more preferably higher than 90/10, and especially from 95/5 to 99:1. The polyethylene (PE) fraction can contain one or more of high density polyethylene (HDPE), low-density polyethylene (LDPE), linear low density polyethylene (LLDPE). Polypropylene fraction (PP) can be either propylene homopolymer or a propylene copolymer with lower amount of ethylene and/or butene. In addition, the feedstock may comprise other polyolefins like polybutene. In a particular embodiment, the feedstock may comprise also polymeric mixtures that incorporates other materials like polystyrene (PS), ethyl-vinyl acetate copolymer (EVA), ethyl-vinyl alcohol copolymer (EVOH), polyvinyl chloride (PVC), or mixtures thereof. In a preferred embodiment, the recycled polyolefin material feedstock is constituted by more than 80 wt.% and preferably more than 90 wt.% of a mixture between polyethylene and polypropylene.

Suitable extruder devices for the process of the present disclosure are extruders or continuous mixers. These extruders or mixers can be single- or two-stage machines which melt and homogenize the polyethylene composition. Examples of extruders are pin-type extruders, planetary extruders or corotating disk processors. Other possibilities are combinations of mixers with discharge screws and/or gear pumps. Preferred extruders are screw extruders and in particular extruders constructed as twin-screw machine. Particular preference is given to twin-screw extruders and continuous mixers with discharge elements and especially to continuous mixers with counter rotating and intermeshing double screw or the extruder device comprises at least one co-rotating double screw extruder. Machinery of this type is conventional in the plastics industry and is manufactured by, for example, Coperion GmbH, Stuttgart, Germany; KraussMaffei Berstorff GmbH, Hannover, Germany; The Japan Steel Works LTD., Tokyo, Japan; Farrel Corporation, Ansonia, USA; or Kobe Steel, Ltd., Kobe, Japan. Suitable extruder devices are further usually equipped with units for pelletizing the melt, such as underwater pelletizers.

In some embodiments, at least the virgin polyolefin powder and one or more additives may be mixed in a mixing device prior to feeding the mixture to the extruder device. The recycled polyolefin pellets may be added directly to the extruder device or they may be added to the mixing device. The mixing device may be any apparatus which allows dry-blending of particles. The mixing device can operate continuously or discontinuously. Preferably, the mixing device operates continuously.

Preferred dry-blending devices are paddle mixers comprising one or two horizontally orientated rotating shafts, more preferably two horizontally orientated counter-rotating shafts. The shafts are equipped with paddles of an appropriate geometry. The rotating shafts move the composition of polyolefin powder and additives horizontally along the axis of the shafts and at the same time mix the composition intensively. Such paddle mixers are commercially available, for example, from Köllemann GmbH, Adenau, Germany or J. Engelsmann AG, Ludwigshafen, Germany. Preferred mixing devices are further vertical batch mixers such as Henschel-Mixers^{®} available from Zeppelin Systems GmbH, Kassel, Germany. Preferred dry-blending devices are also single screw conveyors equipped with blending elements. Preferably, such blending elements are amendable devices such as adjustable paddles or slotted flights to allow controlling the level of blending.

The recycled polyolefin pellets and optionally the one or more additives are preferably supplied from dedicated storage vessels. It is however also possible to supply said recycled polyolefin pellets and optionally one or more additives directly from transport containers such as big bags. The additives which are utilized for preparing the polyolefin compositions of the present disclosure can be supplied in solid form, preferably in form of small particles, or they can be liquid or they are fed in dissolved form. It is possible to supply all additives individually or it is possible to supply one or more mixtures of additives comprising some of the selected additives or a mixture of all additives is supplied with the virgin polyolefin. Preferably all additives are supplied in form of solid particles.

The prepared polyolefin compositions comprises a virgin polyolefin, recycled polyolefin and optionally one or more additives. The composition of the prepared polyolefin compositions is preferably defined by a recipe which identifies the nature of the employed virgin polyolefin, the nature of the employed recycled polyolefin material, the nature of the additives, their number, their quantity and their ratio. The constitution of the prepared polyolefin compositions may differ significantly from prepared polyolefin compositions to prepared polyolefin compositions. However, all polyolefin compositions may comprise a majority of polyolefin. Preferably the polyolefin portion of the prepared polyolefin compositions is from 80 to 99.98 wt.%, more preferably from 95 to 99.95 wt.% and especially from 98 to 99.9 wt.%. The present disclosure not only refers to continuously preparing such polyolefin compositions comprising a virgin polyolefin fraction and a recycled polyolefin fraction but also to producing these compositions accurately with a very constant ratio of the components in an economical and reliable way.

In some embodiments, the amount of polyolefin powder supplied to the extruder device, may be determined via gravimetric dosing.

In some preferred embodiments, the amount of polyolefin powder supplied to the extruder device, in particular the hopper of the extruder device is preferably regulated by a feeding device such as a rotary valve or a screw feeder. By varying the speed of the feeding device, the amount of polyolefin powder supplied to the extruder device can be altered. The speed of the feeding device is preferably controlled by a controller in a way that the fed amount of polyolefin powder corresponds to a preselected set-point corresponding to the desired portion of the polyolefin in the polyolefin composition.

According to a preferred embodiment, it is ensured that the ratio of virgin polyolefin and recycled polyolefin is kept constant by adjusting the flow rates of the recycled polyolefin to the extruder device based on the actually supplied amount of polyolefin powder even for high flow rates of polyolefin powder. By using the actual fed amount of polyolefin powder supplied to the extruder for calculating these set points for the recycled polyolefin material, small variations in the speed of the polyolefin powder feeding device are instantaneously compensated by corresponding modifications in the flow rates of the additives. This stands in contrast to simply using set points derived from the recipe of the polyolefin composition for regulating the flow rates of the one or more additives. Accordingly, the amount of polyolefin powder supplied to the hopper of the extruder device is continuously measured. This occurs by continuously determining the flow rates of the one or more additives.

In addition or alternatively, it may be ensured that the ratio of additives to virgin polyolefins in the polyolefin composition is kept constant by adjusting the flow rates of the one or more additives to the extruder device based on the actually supplied amount of polyolefin powder even for high flow rates of polyolefin powder. By using the actual fed amount of polyolefin powder supplied to the extruder for calculating these set points for the one or more additives, small variations in the speed of the polyolefin powder feeding device are instantaneously compensated by corresponding modifications in the flow rates of the additives. This stands in contrast to simply using set points derived from the recipe of the polyolefin composition for regulating the flow rates of the one or more additives. Accordingly the amount of polyolefin powder supplied to the hopper of the extruder device is continuously measured. This occurs by continuously determining the flow rate of the polyolefin powder.

According to another preferred embodiment of the present disclosure, the flow rate of the polyolefin pellets prepared in the extruder device is measured instead of the flow rate of the polyolefin powder supplied to the hopper of the extruder device and the flow rate of the polyolefin powder to the extruder device is adjusted based on the actual amount of polyolefin pellets produced in the extruder device. By using a measurement of the flow rate of the produced polymer pellets for adjusting the flow rate of the polyolefin powder, variations in the speed of the polyolefin powder feeding device are still compensated, however possible difficulties in measuring polymer flow rates of polymer particles having a certain stickiness are substantially reduced. The flow rate of the polyolefin pellets is preferably measured on dried polyolefin pellets, i.e. preferably downstream of the usually employed underwater pelletizer and centrifugal dryer. In this embodiment, the flow rates of the one or more additives or the recycled polyolefin material supplied to the hopper are either kept constant at a pre-determined value and the ratio of additives or recycled polyolefin to virgin polyolefin in the polyolefin composition is controlled by only adjusting the flow rate of the polyolefin powder supplied to the hopper or, preferably, all the flow rate of the polyolefin powder and the flow rate of the recycled polyolefin material supplied to the hopper and optionally the flow rates of the one or more additives supplied to the hopper are adjusted based on the actual amount of polyolefin pellets produced in the extruder device, preferably employing different control characteristics for controlling the flow rates of the one or more additives and for controlling the feed of polyolefin powder.

Preferably, the flow rate of the polyolefin powder supplied to the hopper or the flow rate of the polyolefin pellets prepared in the extruder device are measured by a solids flow meter.

Solid flow meters ca for example use impact plate, measuring chute or Coriolis measuring technologies. Such solids flow meters are commercially available, for example from Schenck Process, Whitewater, WI, USA or Coperion K-Tron, Gelnhausen, Germany. The solids flow meter is preferably equipped with a controller. This controller allows adjusting the speed of the feeding device, which supplies the polyolefin powder to the extruder, based on information regarding the actually supplied amount of polyolefin powder.

The measured flow rate of the polyolefin powder supplied to the hopper or the measured flow rate of the polyolefin pellets is used to adjust the flow rates of the one or more additives supplied to the hopper. For that, the controller of the solid flow meter transmits a signal, which is indicative of the flow rate of the polyolefin powder to the hopper to a computing unit such as a computer. The computing device continuously calculates set points for the desired flows of recycled polyolefin material and optionally one or more additives to the hopper which set points reflect the amounts of polyolefin powder actually supplied to the extruder device.

In some embodiments, the recycled polyolefin may be present in the final polyolefin composition at 30 to 70 wt.%, preferably 35 to 60 wt.%, most preferably 40 to 55 wt% based on the weight of the polyolefin composition.

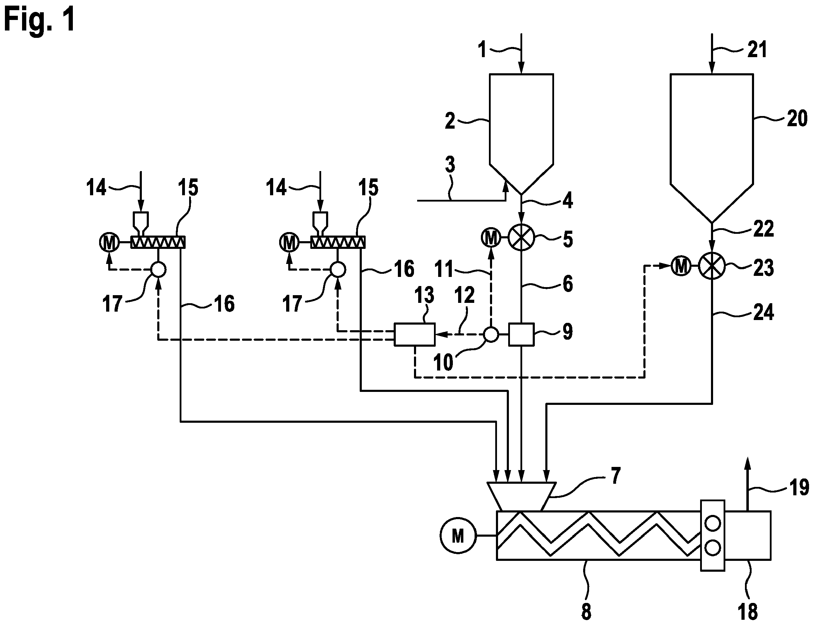

Figure 1 shows schematically a suitable set-up for preparing a polyolefin composition according to an exemplary embodiment of the present disclosure.

Virgin polyolefin powder is continuously prepared in a polymerization process, the virgin polyolefin powder is provided via line (1) to a polyolefin powder storage vessel (2). To maintain flowability of the polyolefin powder in the storage vessel (2), nitrogen is introduced into storage vessel (2) from the bottom via line (3). The polyolefin powder is supplied via line (4) to rotary valve (5) which is operated by motor M. The polyolefin powder is then further transferred by gravity via line (6) to hopper (7) of extruder device (8) which is also operated by motor M. By varying the speed of motor M of rotary valve (5), the flow rate of the polyolefin powder supplied to hopper (7) can be adjusted. On the way from rotary valve (5) to hopper (7), the polyolefin powder passes a solid flow meter (9) which measures the flow rate of the polyolefin powder to hopper (7), that means that measures the amount of polyolefin powder delivered to hopper (7) per time unit. Solid flow meter (9) is equipped with a controller (10). Controller (10) on the one hand sends a signal (11) to motor M of rotary valve (5) for adjusting the flow rate of the polyolefin powder if the flow rate measured by solid flow meter (9) differs from the targeted set point of the flow rate previously implemented in controller (10). On the other hand, controller (10) also sends a signal (12), which is indicative of the flow rate of polyolefin powder from storage vessel (2) to hopper (7), to a computing unit (13).

The polyolefin powder and the additives are all supplied via lines (6) and (16) to hopper (7), in which they are brought in contact. The combination of polyolefin powder and additives is then transferred into the extruder device (8) and therein molten and homogenized. The melt is conveyed within extruder device (8) to pelletizing unit (18) from which the pelletized polyolefin composition is withdrawn via line (19).

The set-up shown in Figure 1 further includes a unit for supplying recycled polyolefin pellets to hopper (7). This unit has a pellet storage vessel (20), to which recycled polyolefin pellets are provided via line (21). The polyolefin pellets are supplied via line (22) to rotary valve (23) which is operated by a motor M. The recycled polyolefin pellets supplied to hopper (7) via line (24) is given by the speed of motor M of rotary valve (23), which speed is set by computing unit (13) based on signal (12); which is indicative of the flow rate of polyolefin powder from storage vessel (2) to hopper (7), and based on the recipe for the polyolefin composition which was previously implemented in computing unit (13).

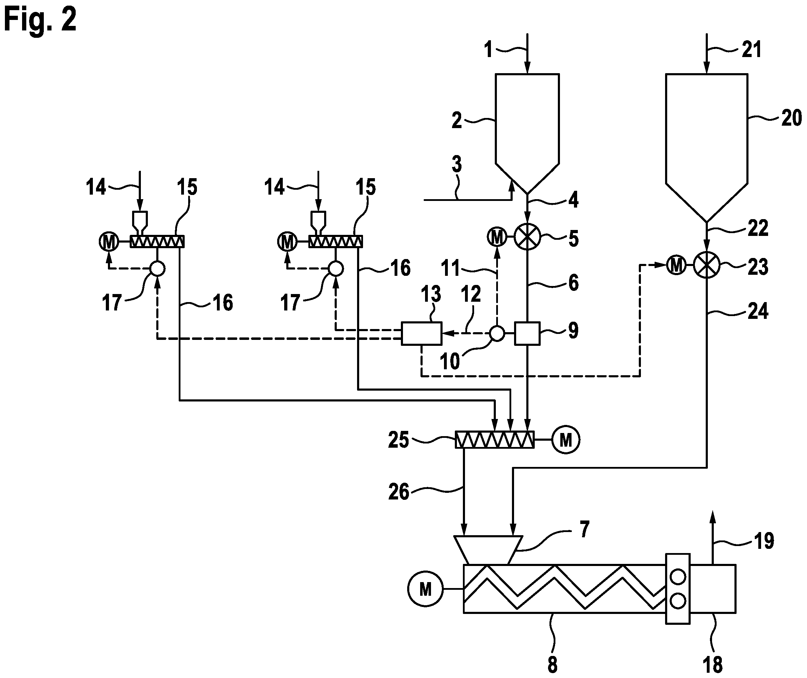

Figure 2 shows schematically a preferred set-up for preparing a polyolefin composition according to the present disclosure in which the polyolefin powder and the additives are first mixed in a mixing device (25) before being supplied to the hopper (7) of extruder device (8).

The set-up for preparing a polyolefin composition shown in Figure 2 is identical to that shown in Figure 1, except that the polyolefin powder and the additives are supplied via lines (6) and (16) to mixing device (25). Mixing device (25) is preferably a paddle mixer comprising two horizontally orientated counter-rotating shafts. The mixture of polyolefin powder and additives is transferred by gravity from mixing device (25) to hopper (7) of extruder device (8) via line (26).

In this embodiment the recycled polyolefin particles from the pellet storage vessel (24) are fed separately from the mixture to the hopper (7) via line (24). However, in an alternative embodiment, the recycled polyolefin pellets may be fed to the extruder device (8) at a feed port downstream from the hopper. In another embodiment, the recycled polyolefin pellets may be added to the mixing device together with the virgin polyolefin powder and optionally one or more additives.

Preferably, the polyolefin powder coming from the polymerization reactor is hot and will not be subsequently cooled down to a temperature below 50°C before being fed to the extruder device. Thus, for the subsequent processing step the virgin polyolefin powder requires less energy to be heated to processing temperature and the residual heat can be efficiently reused. For example, a virgin polyolefin powder is produced having a melt temperature *Tₘ₁* of about 128°C and an enthalpy of melting *dH1* of *174 J*/*g,* as determined via a Differential Scanning Calorimetry (DSC) measurement according to DIN EN ISO 11357-3. Such a polyolefin powder has a specific heat capacity (solid) c of about *2 kJ*/*(kg K)* as can be determined via a Differential Scanning Calorimetry (DSC) measurement according to EN ISO 11357-4. Said virgin polyolefin powder has a high temperature when leaving the polymerization reactor and the corresponding post-processing steps e.g. like degassing and drying. Instead of storing and cooling the powder, said powder is directly processed in an exemplary in-line compounding step with recycled polyethylene pellets to form a polyethylene composition having a content of 50 wt.% virgin polyethylene and 50 wt.% recycled polyethylene. The virgin polyolefin powder is fed to the extruder device or the mixing device at a temperature of 60°C instead of 20°C. Thus, by this temperature difference of 40 K about 22 kWh could be saved for processing 1 ton of virgin polyolefin powder.

## Claims

1. A continuous process for preparing a polyolefin composition comprising a recycled polyolefin component and a virgin polyolefin component, the process comprising the steps of:
a. preparing the virgin polyolefin in form of polyolefin powder or polyolefin melt;
b. providing a recycled polyolefin having a lower temperature than the virgin polyolefin of step a;
c. transferring the virgin polyolefin, the recycled polyolefin and optionally one or more additives into a feed port of an extruder device;
d. melting and homogenizing the virgin polyolefin, the recycled polyolefin and optionally one or more additives in the extruder device; and
e. pelletizing the molten polyolefin composition.

2. The process of claim 1, wherein the virgin polyolefin of step a. has a temperature of between 50 to 300°C in step c..

3. The process of claim 1 or 2, wherein the virgin polyolefin, the recycled polyolefin and optionally the one or more additives are fed to a same feed port of the extruder device.

4. The process of claim 1 or 2, wherein the virgin polyolefin and the recycled polyolefin are fed to different feed ports of the extruder device.

5. The process of claim 1, wherein the virgin polyolefin is a bimodal or multimodal polyolefin.

6. The process of claim 1, wherein the virgin polyolefin is a polyethylene homo- or copolymer.

7. The process of claim 1, wherein the recycled polyolefin is provided in pellet form.

8. The process of claim 1, wherein the virgin polyolefin is supplied in form of the polyolefin powder and a flow rate of the virgin polyolefin supplied to the extruder device or the flow rate of the polyolefin pellets prepared in the extruder device are measured, and when measuring the flow rate of the virgin polyolefin supplied to the extruder device, adjusting the flow rate of the recycled polyolefin supplied to the extruder device in response to the measured flow rate of the polyolefin powder or, when measuring the flow rate of the polyolefin pellets prepared in the extruder device, adjusting the flow rate of the polyolefin powder to the hopper in response to the measured flow rate of the polyolefin pellets and either keeping the flow rate of the recycled polyolefin supplied to the extruder device constant or also adjusting the flow rate of the recycled polyolefin supplied to the extruder device.

9. The process of any one of claims 1 to 8, wherein the virgin polyolefin, the one or more additives and optionally the recycled polyolefin are first supplied to a mixing device, which mixes the virgin polyolefin, the one or more additives and optionally the recycled polyolefin, and the mixture of virgin polyolefin, additives and optionally recycled polyolefin is then transferred from the mixing device to the extruder device.
